# EUROPEAN PATENT APPLICATION

(11) **EP 2 129 114 A2**
(43) Date of publication of application: **02.12.2009**
(21) Application number: 09161517.9
(22) Date of filing: 29.05.2009
(51) Int. Cl.: H04N 7/16

(54) **Media enhancement module**

(30) Priority: 29.05.2008 US 130250 P
(71) Applicant: Phitek Systems Limited, Newmarket, Auckland 1023 (NZ)
(72) Inventor: Lussier, Luc, 0624, Auckland (NZ); Donaldson, Mark, 1030, Auckland (NZ)
(74) Representative: Ahmad, Sheikh Shakeel

(57) **Abstract**

A media enhancement module (13) can be used in conjunction with a media delivery system such as an in-flight entertainment system to enhance media delivered to a user depending on the user's preferences. The module (13) can be provided between a media transmission network and a media player device(15) to receive a media signal from the transmission network and process the media signal to provide the user selected enhancement.

## Description

### TECHNICAL FIELD OF THE INVENTION

The present invention relates to media delivery systems. The invention has particular application to In-Flight Entertainment (IFE) systems and the improvement of media quality and control for airline passengers. However the invention also has application to media delivery systems such as audio or video on demand devices.

### BACKGROUND OF THE INVENTION

In recent years, air travel has become an increasingly popular and affordable mode of transport. Airlines have therefore sought to provide their passengers with increasingly improved services during the course of a flight. Perhaps no in-flight service is more important to the majority of passengers than the In-Flight Entertainment (IFE) system. Other factors being equal, the quality of an IFE system is likely to be one of the reasons a customer would choose to fly with a particular carrier over any of the other possible alternatives.

IFE systems have been long known to provide passengers with a variety of audio and/or visual media options such as music channels, films and TV programmes. The systems have evolved since just a single audio and a single visual channel were available and all passengers could only watch or listen to the same programme if they chose to do so at a given time. The more modern systems effectively provide each passenger with their own personal entertainment system including a personal screen and controller with which they can watch any of a range of possible media at a time of their own choosing. In this way, IFE systems have become increasingly interactive and have put more aspects of the control of the entertainment in the hands of the passenger.

The variety of media features available to users of IFE systems have been slow to develop in comparison with those available in other media-related systems. Passengers increasingly expect more sophisticated media control of an IFE system because of significant developments in other systems.

In particular, audio features of IFE systems have been slow to develop when compared to the other systems. Audio control is generally limited to very simple functions such as muting and volume increasing and decreasing.

Further disadvantages of existing IFE audio systems include the inability to set the volumes of specific frequencies to custom levels or preset levels such as 'rock', 'classics' or 'movies', and the lack of accessibility for hard of hearing passengers. In February 2006 the US Department of Transportation (DOT) issued a notice requiring airline video presentations on IFE systems to be made accessible to passengers who are hard of hearing. Similar initiatives throughout the world may soon follow.

Upgrading an IFE system can be a difficult and expensive procedure. In many instances the existing infrastructure in an aircraft is operating at or near capacity, so it is simply not possible to include any significant additional functionality. Therefore the entire system needs to be removed and replaced. Not only does this incur the expense of a new system, but the aircraft downtime, and the delays involved in having regulatory approvals met all add to the cost.

### OBJECT OF THE INVENTION

It is an object of the invention to provide an improved media processing system.

It as an alternate object of the invention to provide an improved media processing device or method.

It is an alternative object of the invention to at least provide the public with a useful choice.

### SUMMARY OF THE INVENTION

In one aspect the disclosed subject matter provides a media enhancement module for use in a media delivery system, the module comprising:
an input for receiving signals from a media delivery network;
a processor operable to detect a control signal received at the input and being operable to receive a media signal from the input and process the media signal dependent on the control signal to produce a modified media signal;
an output for delivering the modified control signal to a media player device.

In one embodiment the media delivery system comprises an in-flight entertainment system and the input is adapted to receive the output of a seat distribution unit of an in-flight entertainment system network.

In one embodiment the control signal is a signal modulated to encode digital information. The processor may demodulate the control signal to obtain control information to modify the media signal.

In another aspect the disclosed subject matter provides an in-flight entertainment system including a media enhancement module as set forth above.

In another aspect the disclosed subject matter provides an aircraft including an in-flight entertainment system as set forth in the preceding statement.

In another aspect the disclosed subject matter provides an in-flight entertainment system comprising:
a server operable to deliver media data over a transmission network including a seat distribution unit;
a media enhancement module connected between the transmission network and a media player device or a connector for a media player device, the enhancement module being operable to receive a media signal from the transmission network and process the media signal to produce a modified media signal modified to include a user selected enhancement and provide the modified media signal to the media player device or the connector for a media player device.

In another aspect the disclosed subject matter provides a method of delivering media over a media delivery system, the method including:
receiving a media enhancement request;
providing data relating to the enhancement request to a media processing device;
processing the data to provide a control signal that encodes information relating to the enhancement request;
providing the control signal to a further media processing device;
decoding the control signal at the further processing device to obtain control information required to implement the requested enhancement.

In one embodiment the method further includes;
receiving a request for media data;
providing the media data to the media processing device;
processing the media data at the media processing device to obtain a media signal;
providing the media signal to the further media processing device;
processing the media signal at the further media processing device dependent on the control information to produce a modified media signal that is modified to include the requested enhancement;
providing the modified media signal to a media player device.

### BRIEF DESCRIPTION OF THE DRAWINGS

One or more embodiments of the invention will be described below by way of example only and without intending to be limiting with reference to the following drawings, in which:
- Figure 1: is a diagrammatic cross section through part of an aircraft or similar passenger vehicle, showing a known arrangement of in-flight entertainment system.
- Figure 2: is a diagrammatic cross section through part of an aircraft or similar passenger vehicle, showing a media delivery system according to one embodiment of the invention.
- Figure 3: is a diagrammatic illustration of parts of the system of figure 2 in greater detail.
- Figure 4: illustrates a processing module according to an embodiment of the present invention.
- Figure 5: illustrates internal components of a processing module according to an embodiment of the present invention.
- Figure 6: illustrates a number of views of a connector of a processing module according to an embodiment of the present invention.
- Figure 7: illustrates a graphical user interface of a control panel according to an embodiment of the present invention.

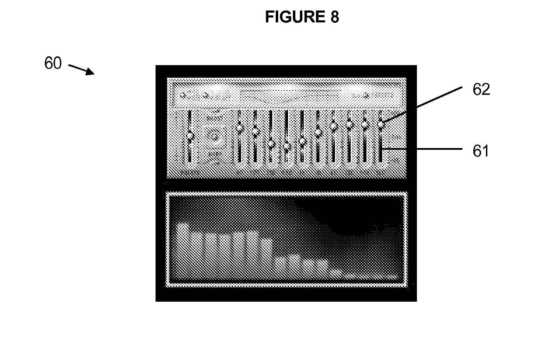

- Figure 8: illustrates a graphical user interface of an audio equaliser according to an embodiment of the present invention.
- Figure 9: is a flow chart illustrating a process flow according to one embodiment of the invention.
- Figure 10: is a diagrammatic illustration of delivery of data over a media delivery network according to one embodiment of the invention.

### DESCRIPTION OF ONE OR MORE EMBODIMENTS OF THE INVENTION

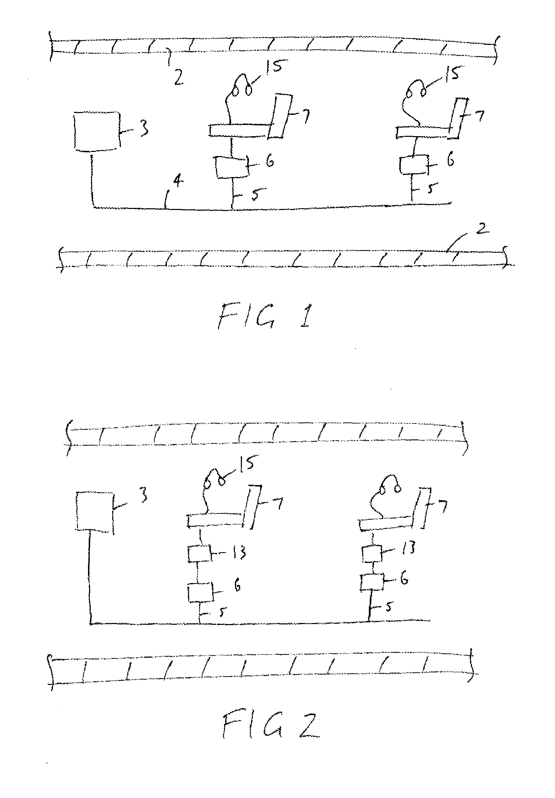

Figure 1 is a diagrammatic illustration of an example of a known in-flight entertainment (IFE) system provided in the cabin of an aircraft 2. The IFE system includes a media source, or server, 3 which serves media to passenger seats over a distribution network including cabling 4, 5 and seat distribution units (SDUs) 6. Each SDU 6 may serve one or more seats 7, typically providing media signals to media player devices such as headsets 15, and/or personal video screens (not shown). Media server 3 contains a large volume of media data and provides the media to users on request, typically streaming the selected media to each user over the distribution network.

Figure 2 diagrammatically illustrates an improved IFE system generally referenced 10 according to one embodiment of the invention. In figures 1 and 2 (and in the remaining drawing figures) the same reference numerals are used where possible to refer to the same, or similar, features. In figure 2 a media enhancement module 13 is provided between the SDU 6 and one or more media player devices (or one or more connectors to which a user may connect a media player device) such as a headset 15. Users may provide their own media player devices, and the media enhancement module 13 may in some embodiments be provided in the media player device.

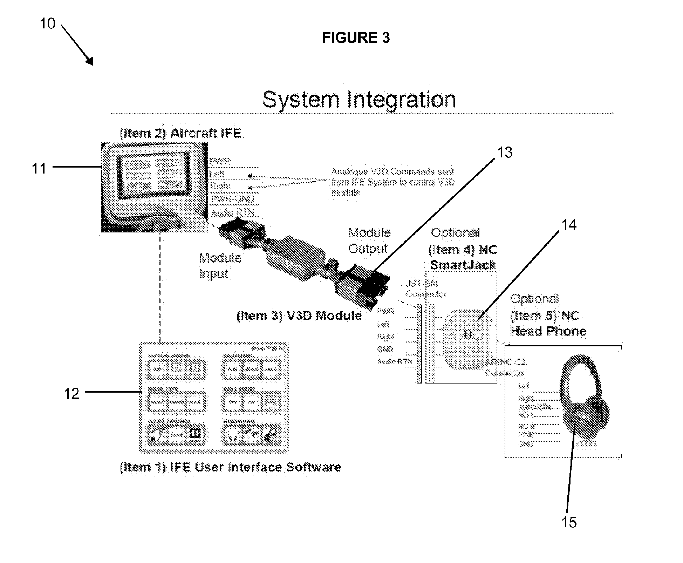

Figure 3 diagrammatically illustrates an embodiment of IFE system 10 in greater detail. The improved IFE system 10 includes an existing IFE server 3, Graphical User interface (GUI) 12, media enhancement module 13, listening device jack 14 and listening device 15. The SDU 6 is not shown for reasons of clarity.

The invention as described herein relates to the enhancement of media of a media distribution system through a processing module. For the purposes of describing the invention, the invention is described in relation to an IFE system, and enhancement of audio signals will be hereinafter discussed. However, it will be known to those skilled in the art that the method can be equally applied to other media enhancement, including video, and including media distribution systems other than IFE systems. For example, the invention has application to other streaming media delivery applications such as audio or video on demand.

Existing IFE server 3 and network 4,5, and SDUs 6 are known as commonly used in passenger aeroplanes or any similar mode of transport. Since this is a known system this will not be described in detail herein.

According to one embodiment of the invention, no change to the the existing IFE system is required apart from installation of the modules 13 and adding some further software to the IFE server 3. In particular, no change in the software in the SDUs is required. Updating software in SDUs can often be time-consuming and expensive. One advantage of the invention is that existing IFE system hardware is re-used, with the addition of one or more modules and with additional software required only in the modules and central IFE processor / server 3, software on which is frequently and easily updated anyway. In one embodiment of the present invention, however, the processors of the SDUs also include additional software.

GUI 12 is presented to a user of the system via a screen such as a personal display screen. As will be known, screens used by passengers on aeroplanes are typically situated in the backs of seats so as to be viewable in front of the passengers located in the seat immediately behind the seat in which the screen is provided. In some instances screens are provided on a mechanical arm device attached to a seat or armrest Alternatively, the screen may be shared by more than one passenger and as such may be situated in a location accessible by the more than one passenger. The variety of possible airline passenger screens is well known and those discussed here are not intended to be limiting to the scope of the invention.

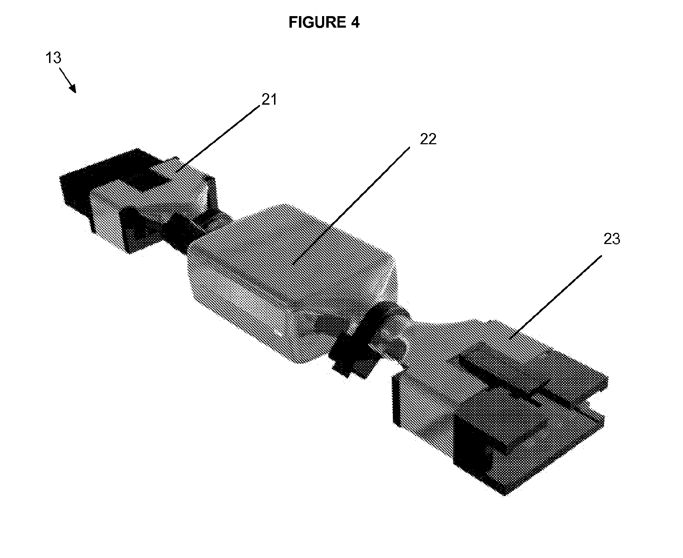

The software associated with GUI 12 is stored and runs on the existing IFE system 11. The particular GUI 12 can be accessed by the users in a variety of ways, for example selecting 'Media Settings' from a main menu or other such methods. Any method by which the user can access the GUI discussed later in respect to Figure 4 is provided.

The existing IFE system is known to comprise one or more Seat Distribution Units (SDUs) 6. The SDUs 6 are located at, and associated with, each seat 7 or row of seats 7 or similar grouping of seats, depending on the configuration of the IFE system in the aircraft. In one embodiment, each SDU 6 is connected to an input connector of one or more processing modules 13. One processing module will typically be provided per SDU 6. However, depending on the processing power of the processing module 13 used, and depending on the configuration of the existing IFE system in an aircraft, any number of processing modules may be provided, and one module 13 may serve a plurality of media player devices. Every processing module 13 may be connected to a SDU 6, or some processing modules may be connected to a SDU 6 via connection through other processing modules 13. A processing module 13 may be positioned proximate to, or contained within, a SDU 6.

An output connector of each processing module 13 is connected to one or more listening device jacks 14. In a preferred embodiment, the output connector from a processing module in a particular row of seats is connected to one or more listening device jacks associated with the seats. The processing module in a particular seat or group of seats outputs a processed media signal to the listening device jack in that seat or group of seats. Therefore, the module 13 processes media signals delivered from the SDU 6 to modify those signals to enhance the media provided to a user depending on the user's preference. For example, one form of audio enhancement to increased the bass frequencies of the audio signal. Further examples are described later in this document.

In one embodiment the control of the media processing is typically achieved through use of a GUI 12 in the seat in front and the production of control signals by a SDU 6 responsive to the enhancement selected by a user using the GUI 12, as described herein. The purpose of generating control signals is to instruct the module 13 as to the type of enhancement requested by a user via the GU 112, or to program the module 13 so that it performs the type of enhancement requested. Examples of forms the manner in which control signals are generated is described further below.

As described above, it is difficult to reprogram or redesign the SDUs 6. Furthermore, as the existing SDUs 6 are not configured to communicate with enhancement module processor 13, providing instructions to the module 13 occurs via the server 3 in one embodiment. It will be understood that the central processor or server 3 has more processing power than each of the SDUs and provides a central point at which global software changes can be made easily. This may add to system latency, but any increased latency is unlikely to be unacceptable. For example, a request for a short audio burst (as will be described further below) as a result of an enhancement setting selection would involve a delay of under 500 ms. Longer delays could be possible, however, which would impact the user experience. In this situation a message saying "please wait a moment for the system to process your request", or similar, could be displayed to the user. In a typical modern IFE system based on Ethernet switching the latency has been shown to be below 100 ms which has a minimal impact on users. Nevertheless, there is a balance to be sought between these issues depending on the priorities of the situation to which the invention is applied. In one embodiment, a server based command set is provided in the form of compressed audio files which can require encryption. A file naming convention is used to maintain an error-free operation. In one embodiment, the command files are kept in the server RAM to reduce latency and optimise user experience.

A listening device jack 14 can be any suitable jack for connecting a listening device 15. US Patent 6,988,905 discloses a headphone smart jack enabling passengers to plug any of a range of headphones into the IFE system including noise cancellation headphones and aviation industry headphones. A passenger would therefore be able to enjoy listening to media using their own personal headphones or those supplied by the airline. These headphones may differ slightly as to optimal listening frequencies and passengers would like to be able to select the optimal settings according to their particular make and model of headphones.

Common listening devices 15 used on aeroplanes by passengers are personal headsets or headphones. These may include the standard headsets issued to passengers by the airline or a passenger's own headset. Other listening devices apart from headsets such as personal speakers are also able to be used and the invention is not limited to any particular listening device. Since the variety of possible listening devices may have different connection jacks, the scope of the invention covers any jack such that it is possible to connect a listening device to the system to listen to the audio output of the system. Such a connection may also include wireless listening devices such as those compatible with Bluetooth technology.

Control software communicates with and controls the processing module 13 . In one embodiment the communication / control signals are inaudible to users. This is generally preferable to user experience as whatever the user is listening to is not disturbed by audible communication signals. However, in another embodiment, communication and control signals use audio-level (audible) based communications over IFE audio signal wiring. The audio signal wiring is a standard element of existing IFE systems. The production of audio-level communications in such a way is well known in the art.

To provide error control in the control of the functionality of processing module 13 a Forward Error Correcting (FEC) protocol may be used, for example over the available audio signal wiring link. This is generated through efficient low requirements software incorporated within the control software installed on the existing IFE system 11. The use of FEC protocols in such systems are well known to those skilled in the art and shall not be discussed in detail here.

Figure 4 illustrates a processing module 13 according to an embodiment of the present invention. Processing module 20 comprises an input connector 21, a processing unit 22 and an output connector 23.

Processing module 20 interfaces with existing IFE system 11 using existing wiring commonly used in IFE systems. As such, processing module 13 is a pass-through connector device. Input connector 21 and output connector 23 may be any suitable connector for connecting this wiring to a processing module as described herein, but in a preferred embodiment of the present invention a standard JST connector is used. As an example, a JST SMR-06V-B connector may be used, although it will be known to those skilled in the art that any suitable connector may be used without limiting the scope of the present invention.

Processing module 13 is preferably encased in a metal such as aluminium to provide a Faraday shield. This minimises radio-frequency radiation and other electromagnetic fields within the casing so that the functioning of the processing module is not affected by ambient fields.

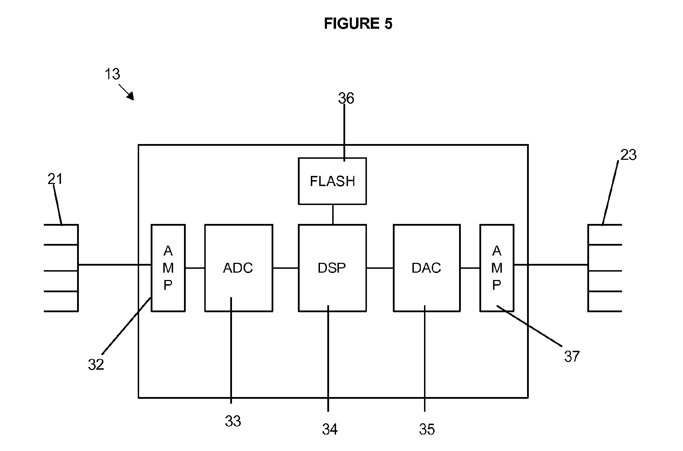

Figure 5 illustrates internal components of a processing module 13 according to an embodiment of the present invention. Processing module 13 comprises an input connector 21 connected to amplifier 32. Amplifier 32 is connected to Analogue to Digital Converter (ADC) 33, which is connected to Digital Signal Processor (DSP) 34. DSP 34 is connected to Digital to Analogue Converter (DAC) 35 and flash memory 36. DAC 35 is connected to amplifier 37, which is connected to output connector 23. Although not illustrated in Figure 3, filters may be provided within processing module 30 to filter the input and output signals.

Input audio signals and control signals are received at input connector 21 from the existing IFE system. The signals are amplified by amplifier 32 and pass through ADC 33. DSP 34 and flash memory 36 provide the audio signal processing according to aspects of the present invention described herein. For example, DSP 34, in conjunction with flash memory 36, detects and modifies the audio signals received from the existing IFE system in accordance with the settings selected by the user and communicated via digital control signals to the processing module as described herein. DSP 34 outputs the modified audio signals to DAC 35. The signals pass through amplifier 37 and are outputted by output connector 23.

In an alternative embodiment of the invention, a Bluetooth chip may be used in the processing module.

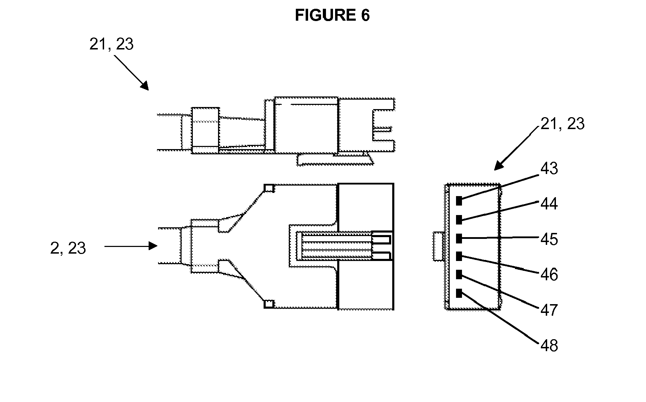

Figure 6 illustrates a number of views of an input or output connector of a processing module according to a preferred embodiment of the present invention. Connector 21 or 23 is shown in side aspect and from an above aspect. The plug layout is also shown which plugs into the connector to make the desired connection between the processing module and the IFE system wiring.

Connection plugs 21 and/or 23 comprise a number of pins 43 to 48. Each pin is assigned a function according to standard connection wiring in IFE systems. As a non-limiting example but in a preferred embodiment of the present invention, pin 43 connects a right audio channel, pin 44 connects a left audio channel, pin 45 connects a return / ground audio channel, pin 46 connects a 12V power supply, pin 47 connects to ground or power return and pin 48 has no functional connection. It will be clear that the order of these pins is incorporated herein by way of example and these may be altered to suit the particular circumstances in which the connector is used. In an alternative embodiment, a 5-pin JST connector is used in which there is no pin 48 that has no functional connective purpose.

Power for the processing module is provided from the available 12V power supply used in IFE systems. This is provided through the connector to the processing module and is within the power drain usage limitations as required by common IFE system specifications.

In one embodiment, all audio signals and control communications are provided to the processing module over the audio right and audio left lines. In one embodiment, the control communications are sent as inaudible signals so that the impact to the user experience is minimised. In an alternative embodiment, the control communications are sent as audio-level (audible) signals, and so they are within the audio bandwidth limitations as required by common IFE system specifications. The control signals comprise signals that encode information that is used by module 13 to provide the enhancement requested by the user to media signals provided to the input of the module 13. In one embodiment the control signals are modulated to encode the information digitally as digital information.

In an embodiment in which the control communications are inaudible, any suitable digital modulation scheme can be used, such as Orthogonal Frequency Division Multiplexing (OFDM). Such a scheme is known to those skilled in the art. These schemes are computationally intensive but provide an inaudible solution, which may be preferable to the user. In this embodiment the commands may be supplied as pre-encoded audio files and therefore encoding is not an issue in terms of processing load.

In another embodiment, since all audio signals and control communications to the processing module are over analogue audio lines of the IFE system, a suitable audible audio tone architecture is utilised. The technique employed achieves the communication of digital information over the analogue channel using a DTMF (Dual-Tone Multi-Frequency) signalling methodology, or using frequency modulation (FM) techniques. Such methodologies are well-known in the field of telephone tone dialling (Touch-Tone) in standard telephones and data communications systems and shall not be described in detail herein. In an alternative embodiment phase modulation of known frequency tones is employed.

Steganographic acoustic techniques may optionally be applied to the generated audio control signals in order to reduce or mask, and thereby acoustically hide, the control communications signalling tones from the listener.

In one embodiment, control signals are sent at frequencies which the human ear cannot detect easily, especially in an aeroplane environment. For example, by using frequencies at which the background noise of the aeroplane's engines is loudest, the control signals may go undetected by users, or at least disruption may be minimised.

For the purposes of explanation hereinafter, the use of a DTMF signalling methodology will be discussed by way of example. However, as discussed above, it will be understood that other methodologies are within the scope of the invention. Therefore, in the discussion below, references to DTMF tones may be interchanged with FM symbols or other control tones, as appropriate to the method of embodying the invention.

As communication from the processing module back to the software installed on the IFE system is difficult, the control architecture must be highly reliable. The system must therefore be able to recover from any errors in transmission, errors due to background noise or superposition of the DTMF or other signalling control tones on the programme audio, or any other errors in the protocol or signalling as presented from the IFE software.

The required digital command codes are encoded as suitable analogue DTMF tones or FM symbols by the IFE system and are provided over the available audio lines simultaneously (left and right audio channels). This provides the processing module with redundant transmission of information, and enables a robust communications channel. Differential signalling may also be employed to further reduce noise and improve the communications channel. The processing module verifies that the command received is valid for both channels and that the digital encoded command in the DTMF tone codes is also valid, and then will execute the appropriate control commands through the DSP modifying the received audio signal accordingly.

The error-proof transmission requirements encompass not only the redundant transmission as specified above, but will also make use of the DTMF signalling requirements (SNR - Signal to Noise Ratio, Twist-Tone Levels, Duration -Signalling Time, Inter-tone Time, and Cycle Time), in addition to having Forward Error Correction (FEC) information in the digital information transmitted in the DTMF tones.

The DTMF tones may be based on a variety of tonal schemes. However, in a preferred embodiment the tones will be based upon a musical scale to give a pleasing experience to the user. Another possibility is to use the standard non-musical DTMF tones used in telephone signalling as will be known in relation to such methods. The tones become what amounts to a feedback 'beep' to the listener, thereby indicating that the selection they have made has been accepted.

It is preferable that the IFE software mutes the audio from the current programme output from the IFE system while transmitting the DTMF tones. However, the processing module DTMF detection architecture filters and rejects background audio information (noise or programme audio), thereby still permitting the DTMF control information to be successfully received by the processing module. A minimum SNR (DTMF tones to background audio level) is required for this style of operation to be successful. This may result in louder control tones to the listener. However, through the use of musical DTMF signalling, and immediate and automatic muting of the audio output from the IFE system by the processing module, the discomfort of this to the listener will be minimised.

Additionally, as the audio outputted by the processing module is controlled by the processing module itself, depending upon the function requested, the output audio may be automatically muted once detected by the processing module during the DTMF transmission period by the IFE system, and then faded-in once the commands have been completed, thereby further improving the listener's overall experience. An additional success beep may be optionally added by the processing module, thereby explicitly indicating to the listener that the command has been successfully received and has been applied.

DTMF tone or FM signal generation is performed by the IFE system, and is based on an infinite impulse response (IIR) filter design. The implementation requirements for this type of signal generation are a very low overhead, require no data tables, and require a minimum of code and memory space, at the expense of a slight increase in processing requirements to calculate the output tones required. Most common IFE system s have enough processing power to cope with these requirements.

The processing power requirement for tone generation by the IFE system is of the order of 1 to 2 MIPS (Million Instructions Per Second) for a 48 kHz signal, depending on the IFE system processor and implementation.

If the IFE system is capable of lower sampling rate audio signal generation, then the final MIPS requirement is lower, as long as the output DTMF tones generated are still suitable for reception by the processing module. A lower bound on the IFE system output sampling rate which is supported by the processing module is 8 kHz, which is identical to the DTMF / Telephone standard.

A preferred method for DTMF Tone detection, reception and decoding by the processing module is based on a DFT (Discrete Fourier Transform) methodology utilising Goertzel single-frequency detection, and applying all the DTMF signalling requirements upon the audio received. Such a method will be known to those skilled in the art, along with other suitable methods which are also incorporated into the scope of the present invention. All input audio is digitised by the processing module and processed internally at a 48 kHz sampling rate.

The received digital information is then further processed through the FEC system, verified for integrity and validity, and the command applied as received. The final processed audio signal is then output at a 48 kHz sampling rate to the listener.

In preferred embodiments the following qualities of the DTMF signalling are provided: tone duration minimum length of 25 ms; tone cycle minimum inter-tone spacing of 25 ms; command cycle minimum inter-command spacing of 50 ms; 10 tones per command; and frequency band 200 Hz to 2 kHz for the DTMF tones.

In the embodiments hereinbefore described, a processing module according to the invention outputs media or audio signals to, for example, a listening device jack. In an alternative embodiment of the invention, the processing module and listening device jack are integrated into a single unit. This may provide commercial supply advantages, for example where an airline sources listening device jacks from a supplier and can take advantage of the benefits of the invention without having to purchase separate hardware units.

In a still further embodiment, the processing module may be a unit which is plugged into the listening device jack. In this embodiment the signals are processed by the module after passing through the listening device jack. The plug-in module processes signals in a similar to the modules described above. The plug-in module may only have three inputs such that it is compatible with existing jacks: a 12V power line; left audio channel and right audio channel.

The plug-in module may additionally, or alternatively, be able to transmit audio signals wirelessly to a wireless headset. Audio signals may be transmitted by infra-red, radio frequency signals or any other means or protocol which will be known to those of skill in the art, including via Bluetooth. Wireless headsets are advantageous in an aeroplane since they avoid the problems associated with cables such as entanglement. The plug-in module may be offered to passengers by the airline or they may be bought separately.

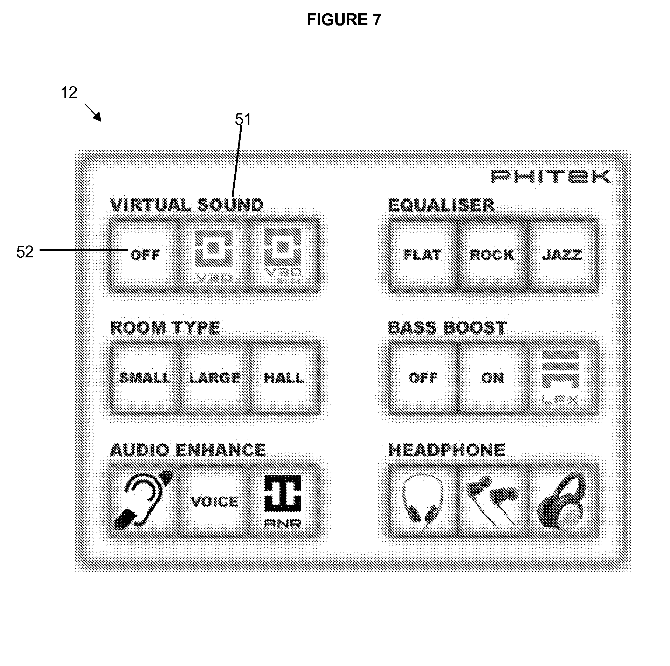

Figure 7 illustrates an example of GUI 12 of a control panel according to an embodiment of the present invention. The GUI 12 allows users to select one or more of the audio settings provided by the present invention. GUI 12 is divided into a plurality of sections identified by a section header 51. The number of sections presented by the GUI is dependent on the specifications of the particular embodiment used and those shown in Figure 5 are intended by way of example only. Associated with each section header 51 are one or more buttons 52 which can be selected by the user. There are many possible methods of selection of buttons and these will vary depending on the set up of the particular IFE system the present invention is incorporated within. However, typically common methods will include moving a cursor around the screen to the relevant button and selecting it by pressing a button on an associated keypad, or pressing the screen in the relevant place when touch-screen technology is used.

The audio settings presented to the user are activated by the processing module to modify the audio signal from the IFE system accordingly. The following possible audio settings are exemplary of the variety of settings that may be provided using the present invention. These are intended as non-limiting examples and it will be known that many other settings are possible using the invention.

Multi channel media - setting which creates the virtualisation of multiple sound sources such that using standard twin speaker headphones the user is under the impression there are a number of speakers in different locations providing the sound.

Stereo media - setting which provides the listener the acoustic impression of a wider space and a more 'natural' sound.

Mono media - setting which creates a varied acoustic reverberation on both left and right audio channels giving users a more vibrant sound and an impression of hearing stereo sound when the sound is actually mono. This has particular relevance to movie audio for an alternative language audio option in an IFE system.

Bass boost - setting to improve bass perception. This may also include a LFX® setting which uses the audio perception principle of 'the missing fundamental' to significantly improve bass perception beyond the acoustic range of low cost economy headphones such as may be provided as standard by an airline.

Hard of hearing - setting offering hard-of-hearing passengers the option to boost voice levels on movie audio tracks.

Audio equaliser - setting to enable users to set the level of different frequencies in the audio signal to suit their own needs. This option includes a variety of preset options such as 'rock', 'classics', 'jazz' and 'pop' as well as allowing the user to customise the settings as required. This is further described below. It will be known that a variety of preset options are possible in addition to the few listed above.

Head phone selection - setting to enable users to select the audio output to suit their own particular headphones. In particular, the user can select from settings corresponding to a number of top tier headphones or headphone brands. On selection, the processing module modifies the audio signal to correspond to the preset optimal frequency response for that particular make and/or model.

Additional functionality offered by the present invention resolves other issues that are common in relation to audio quality of IFE systems. For example, encryption errors of media can result in single channel (mono) audio being received and audio levels can be inconsistent when switching between channels or media types. The present invention resolves such issues by dynamically managing the final volume and audio equalisation provided to the listener, and through automatic virtualisation of both stereo and mono material, thereby providing the listener the acoustic impression of a wider space and a more 'natural' sound. This effectively masks any mono/stereo switching which may have occurred.

Figure 6 illustrates a GUI of an audio equaliser 60 according to an embodiment of the present invention. The audio equaliser 60 presents the user with one or more control buttons 62 associated with a corresponding number of frequencies 61 for the user to be able to change the volume levels of each frequency according to their desire by sliding the control button 62 up and down the frequency range. The example illustrated in Figure 6 is one example of such an audio equaliser and it will be understood that other example are possible, such as numerical volume indicators for each frequency, up and down buttons that the user can select to alter the volume levels, and fewer or more frequencies.

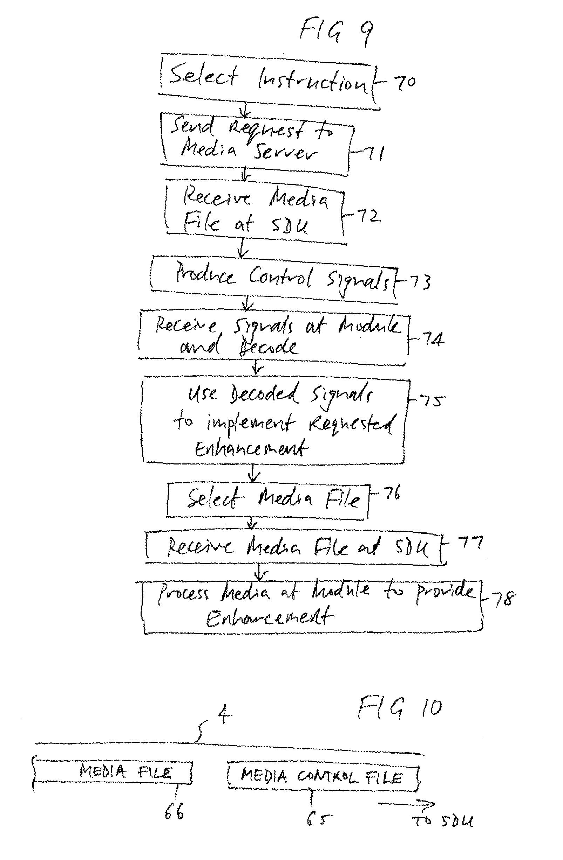

Referring to figure 9, a simple flow chart illustrating a process flow for selection and implementation of a media enhancement feature is now described for one embodiment of the invention.

The process begins at step 70 with a user using GUI 12 to select a media enhancement feature. The GUI sends a request to the server 3 in step 71 to provide selected data to the relevant SDU 6, and the data is received at the SDU 6 in step 72. As mentioned above, the data may be provided in a number of different formats. The data provided by server 3 in response to the request has the function that once decoded or otherwise processed by the relevant SDU 6, provides a modulated control signal output that can be communicated over the communication channel between the SDU 6 and the module 13. For example, it may comprise a digital media file that results in the SDU 6 generating a sequence of DTMF tones. This occurs in step 73.

The modulated control signal is detected and decoded by the module 13 in step 74. This can occur in a variety of different ways. In one example, the control signal includes a predetermined sequence of DTMF tones that the processor 34 in module 13 recognises by detection of the tones as an instruction to run a program stored in memory 36 which then implements the requested feature. In another example, the control signal includes a set of instructions comprising a program which is loaded into RAM and used to implement the requested feature. This occurs in step 75.

With the module 13 operable to implement the requested media enhancement feature, the user then uses GUI 12 to select a media file for delivery to the media player device, such as headset 15. The user makes the selection in step 76. The server 3 retrieves the selection and commences delivery or streaming to the SDU in step 77. The SDU 6 processes the media data to provide a media signal to the module 3 which processes the signal to provide a modified media signal that includes the enhancement for delivery to the media player device in step 78.

As can be seen, the server 3 can, in one embodiment, be simply provided with a selection of digital media files that can be used to implement control of the module 13, together with the conventional library of entertainment media files. Figure 10 diagrammatically illustrates this showing delivery of a media file 65 that is used for purposes of control of module 13, followed by an entertainment media file 66 which is subsequently streamed to the SDU 6. In this manner, the user instructions are all sent to server 3, from which the module 13 is then controlled.

Where the words "comprises" or "comprising" are used herein, the words are defined as inclusive unless the context clearly indicates otherwise.

It should be noted various changes and modifications to the herein disclosed embodiments may be apparent to those skilled in the art. Such changes and modifications may be made without departing from the spirit or scope of the invention and without diminishing its advantages. It is therefore intended that such changes and modifications be included within the scope of the present invention.

## Claims

1. A media enhancement module for use in a media delivery system, the module comprising:
an input for receiving signals from a media delivery network;
a processor operable to detect a control signal received at the input and being operable to receive a media signal from the input and process the media signal dependent on the control signal to produce a modified media signal;
an output for delivering the modified control signal to a media player device.

2. A module as claimed in claim 1 wherein media delivery system comprises an in-flight entertainment system and the input is adapted to receive the output of a seat distribution unit of an in-flight entertainment system network.

3. A module as claimed in claim 1 wherein the control signal is a signal modulated to encode digital information.

4. A module as claimed in claim 3 wherein the processor demodulates the control signal to obtain control information to modify the media signal.

5. A module as claimed in claim 4 wherein the control information is used to select a program resident in the module.

6. A module as claimed in claim 4 wherein the control information is used to program the module.

7. A module as claimed in claim 1 wherein the input or the output is adapted for connection to analog signal channels.

8. A module as claimed in claim 1 wherein the media signal and the modified media signal comprise audio signals.

9. An in-flight entertainment system including a media enhancement module as claimed in claim 2.

10. An aircraft including an in-flight entertainment system as claimed in claim 9.

11. An in-flight entertainment system comprising:
a server operable to deliver media data over a transmission network including a seat distribution unit;
a media enhancement module connected between the transmission network and a media player device or a connector for a media player device, the enhancement module being operable to receive a media signal from the transmission network and process the media signal to produce a modified media signal modified to include a user selected enhancement and provide the modified media signal to the media player device or the connector for a media player device.

12. A method of delivering media over a media delivery system, the method including:
receiving a media enhancement request;
providing data relating to the enhancement request to a media processing device;
processing the data to provide a control signal that encodes information relating to the enhancement request;
providing the control signal to a further media processing device;
decoding the control signal at the further processing device to obtain control information required to implement the requested enhancement.

13. A method as claimed in claim 12 wherein processing the data to provide a control signal includes providing a control signal modulated to digitally encode the information.

14. A method as claimed in claim 12 or claim 13 further including;
receiving a request for media data;
providing the media data to the media processing device;
processing the media data at the media processing device to obtain a media signal;
providing the media signal to the further media processing device;
processing the media signal at the further media processing device dependent on the control information to produce a modified media signal that is modified to include the requested enhancement;
providing the modified media signal to a media player device.
